# EUROPÄISCHE PATENTSCHRIFT

(11) **EP 2 040 153 B1**
(45) Veröffentlichungstag und Bekanntmachung des Hinweises auf die Patenterteilung: **24.06.2020**
(21) Anmeldenummer: 08008349.6
(22) Anmeldetag: 02.05.2008
(51) Int. Cl.: G06F 3/0489, H04M 1/725, G06F 9/451

(54) **Verfahren zur Kalibrierung eines Mobiltelefon-MMIs für die Darstellung und Bedienung einer Anwendungs-Software**
Method for calibration of a mobile phone HCI for the display and operation of an application software.
Procédé pour l'étalonnage d'un IHM de téléphone mobile pour l'affichage et l'utilisation d'un logiciel d'application.

(30) Priorität: 19.09.2007 DE 102007044986
(43) Veröffentlichungstag der Anmeldung: 25.03.2009
(73) Patentinhaber: Deutsche Telekom AG, 53113 Bonn (DE)
(72) Erfinder: Beyer, Rolf, 53639 Königswinter (DE); Lameyer, Lutz, 51375 Leverkusen (DE); Tas, Taner, 53721 Siegburg (DE)
(74) Vertreter: 2K Patentanwälte Blasberg Kewitz & Reichel

(56) Entgegenhaltungen:
- WO-A1-96/08811
- WO-A1-2004/112361
- JP-A- 2005 004 527
- US-A1- 2003 070 061
- US-A1- 2004 012 627

## Beschreibung

Die Erfindung betrifft ein Verfahren zur Kalibrierung eines Mensch-Maschine-Interface einer JAVA-Anwendungssoftware für Mobiltelefone bzw. mobile Endgeräte.

### Gebiet der Erfindung:

Um "fremde" Anwendungssoftware für ein Mobiltelefon bereitstellen zu können, muss zum einen der Hersteller des Telefons die Installation fremder Software zulassen und zum anderen die Software kompatibel zu dem Betriebssystem des Telefons sein. Zudem wurde in den letzten Jahren eine spezielle JAVA-Plattform für Mobiltelefone, welche einen Mindeststandard an MMI-Funktionalität erfüllen, geschaffen, J2ME (Java 2 micro edition). Jedoch war es bisher aufgrund unterschiedlicher Gerätemerkmale wie Display-Größe oder Belegung und Art der Tastatur nicht möglich, eine Software-Version für unterschiedliche JAVA-Mobiltelefone zu verwenden, falls die Anwendung ein einheitliches Verhalten bezüglich MMI (Man Machine Interface) mit Eingabe (Bedienung) und Ausgabe (Darstellung auf dem Display) haben soll.

Vor dem Herunterladen einer Anwendungs-Software, etwa einer Spiele-Anwendung, muss bisher der Typ des Mobiltelefons ermittelt werden. Dies kann entweder automatisch durch den Download-Server erfolgen, indem der User-Agent-Header des HTTP-Requests ausgewertet wird, oder manuell durch den Benutzer selbst, indem er den Typ seines Mobiltelefons (z.B. auf einer Internetseite) explizit auswählt, bevor der Download gestartet wird.

Der Anbieter der Anwendungs-Software muss wiederum dafür Sorge tragen, dass stets aktuelle Modelle von Mobiltelefonen bei der o.g. Auswahlmethode auswählbar bzw. zuordenbar sind. Zudem muss für das (automatisch oder manuell) ausgewählte Modell die entsprechend modifizierte Software zum Download bereitstehen.

Aus den Druckschriften US6581109, KR20040046457, WO0111905, JP11109933, KR20030075332, KR20040050611, CN1725765 sind Verfahren bekannt, welche sich mit MMMI-Kalibrierung und/oder JAVA befassen, nicht jedoch das beschriebene Problem lösen. JP 2005 004527 offenbart ein Verfahren, bei dem von einem Server ein Testmuster an ein Terminal gesendet wird, und durch das Berühren mit dem Finger werden das Format und die Eigenschaft des berührungsempfindlichen Terminals bestimmt. WO 2004/112361 A1 offenbart ein Verfahren zur Bestimmung und Definition von Short-Cut Tasten, also Tasten auf die man benutzerindividuell Funktionen legen kann. WO96/08811A1 zeigt ein Verfahren bei dem die Signale eines CRTs angezeigt werden.

### Überblick über die Erfindung:

Aufgabe der vorliegenden Erfindung ist es, ein Verfahren zur Kalibrierung des Mensch-Maschine-Interface, einer Anwendungssoftware für Mobiltelefone bzw. mobile Endgeräte bereitzustellen.

Gelöst wird diese Aufgabe durch ein Verfahren, einen Datenträger bzw. eine Anwendungssoftware mit den Merkmalen der unabhängigen Ansprüche. Vorteilhafte Ausführungsformen sind in den Unteransprüchen aufgeführt.

In der bevorzugten Ausführungsform handelt es sich um Verfahren zur Kalibrierung des Mensch-Maschine-Interface einer JAVA-Anwendungssoftware für Mobiltelefone bzw. mobile Endgeräte umfassend die folgenden Schritte. Nach dem Programmstart einer JAVA-Application, wird ein Kalibrierungsdialog gestartet, der spezifisch für diese Anwendung Daten sammelt. Es ist natürlich nicht ausgeschlossen, dass die gesammelten Daten auch von anderen Anwendungen genutzt werden, soweit die Daten dauerhaft abgespeichert wurden. Zunächst wird der Benutzer im Bestätigungsdialog aufgefordert, eine Bestätigungstaste über die Tastatur oder einen Stift zu betätigen, damit eine Dialogfunktion zur Bestätigung von Eingaben definiert ist. Danach kommt eine Aufforderung zur interaktiven Festlegung des sichtbaren und später genutzten Displayausschnitts. Darauf erfolgt ein Abfragen der linken und rechten "Softwaretasten", wobei wiederum deren Tastaturcode ermittelt wird. Danach kann die JAVA-Anwendungssoftware unter Verwendung der eingegebenen Kalibrierungsinformationen gestartet werden.

Es wird nun ein Verfahren vorgestellt, bei dem dagegen nur eine Software für alle Endgerätetypen, die einem Mindeststandard (z.B. J2ME / MIDP2) entsprechen, entwickelt werden muss.

Nach Installation der Anwendungs-Software per s.g. JAR-File (Java-Archiv) wird nach Programmstart ein Kalibrierungsdialog aufgerufen. Zunächst wird der Benutzer aufgefordert, die Taste "1" zu betätigen, damit wird eine Dialogfunktion zur Bestätigung von Eingaben definiert. Die Zuordnung des Zehnertastaturfeldes (Zeichen 0-9, * und #) zu entsprechenden Tastaturcodes ist im Java-Standard (Mobile Information Device Profile 2.0) definiert, z.B. Taste "0" _ "KEY-NUMO".

Jedoch kann mit diesem ersten Verfahrensschritt auch eine relative Zuordnung der Zehnertastatur abgefragt werden, falls die Plattform eigene Keycodes verwendet. Z.B., ergibt das Betätigen der Taste "1" den Keycode 13, dann haben die Taste "0" den Keycode 12 und die Taste "9" den Keycode 21.

Als Nächstes wird der Benutzer aufgefordert, ein Rechteck, welches auf dem Display in der linken oberen Ecke eingezeichnet ist, mit den Cursortasten "nach unten" und "nach rechts" maximal bis zum rechten bzw. unteren Rand des Displays aufzuziehen. Hiermit wird der sichtbare und später genutzte Displayausschnitt festgelegt.

Als letzter Schritt der Kalibrierung erfolgt eine Abfrage der linken und rechten "Softwaretasten", wobei wiederum deren Tastaturcode ermittelt wird.

Falls notwendig, können auch noch weitere Schritte zur Abfrage von Tasten wie "zurück", "clear", "fire" oder Cursortasten zusätzlich eingefügt werden. Dabei kann dann aber ggf. die Universalität der Software bezüglich Anwendbarkeit auf verschiedenen Endgerätetypen leiden, da es sich hier z.T. nicht mehr um Standardtasten handelt.

Nun kann die eigentliche Anwendungs-Software gestartet werden. Die Zehnertastatur, die Cursortasten und die Software-Tasten sind nun eindeutig zugeordnet und die Größe der Displaydarstellung ist definiert. Der Dialog zur Kalibrierung des MMI kann aus der Anwendungs-Software später auch erneut aufgerufen werden, falls der Benutzer z.B. die Darstellung auf dem Display ändern möchte.

Gemäß eines weiteren Beispiels, das keinen Teil der Erfindung darstellt, kann die Kalibrierungssoftware ferner automatisch erkennen, ob es sich bei dem Endgerät um ein Endgerät mit "Stifteingabe" handelt, also mit interaktiven Display. In diesem Falle wird das Kalibrierungsmenü abgeändert. Es wird im oberen linken Bereich des Displays ein OK-Button sowie ein Cursorkreuz (nach oben, rechts, unten und links) sowie analog obiger Beschreibung ein Rechteck eingeblendet. Die Bestätigung der einzelnen Schritte erfolgt dann über den eingeblendeten OK-Button, das Aufziehen des Rechtecks auf maximale Displaygröße über die eingeblendeten Cursortasten.

### Figuren Beschreibung

Im Folgenden werden die Figuren kurz beschrieben. Die Figurenbeschreibung und die detaillierte folgende Beschreibung dienen lediglich zum besseren Verständnis und sollen nicht die Erfindung einschränken. Es zeigen:

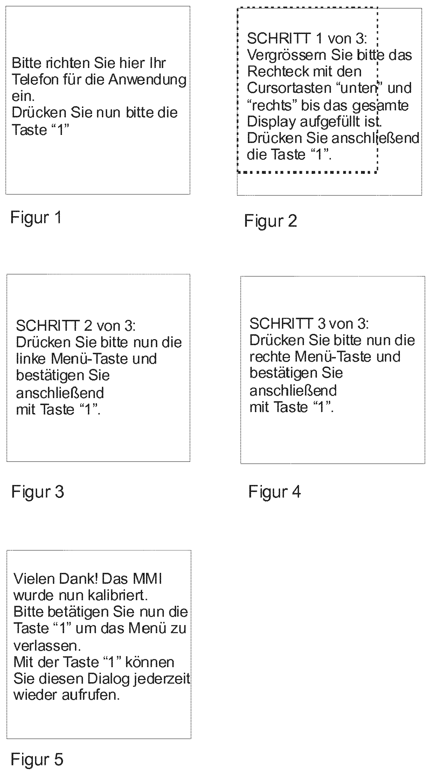

- Fig. 1-5: : den Ablauf des Verfahrens zur Anpassung der Anzeige einer Anwendung.

### Beschreibung einer Ausführungsform:

Die Fig. 1 zeigt das Verfahren, nachdem die Anwendung auf dem mobilen Telefon gestartet wurde. Somit wird nach Erstaufruf der Anwendung das Kalibrierungs-Menü aufgerufen. In einem Dialog wird der Anwender aufgefordert, die Anwendung für das Telefon einzurichten. Um die Anordnung und Codes der Tastatur kennenzulernen, wird der Benutzer aufgefordert, die Taste "1" zu drücken. Zunächst wird die Zehnertastatur abgefragt bzw. die Taste "1" als Bestätigungsfunktion festgelegt. Dazu wird der Benutzer aufgefordert die Taste "1" zu betätigen (Abb. 1). Es folgt die Ermittlung der sichtbaren Displaygröße (Fig. 2), dazu soll der Benutzer mit den Cursortasten ("nach unten" und "nach rechts") ein eingezeichnetes Rechteck auf Maximalgröße ziehen. Die Figur 2 zeigt den Schritt 1 von 3, bei dem ein Rechteck z.B. mit den Cursortasten so vergrößert wird, bis das gesamte Display aufgefüllt ist. Es ist natürlich denkbar, jedoch nicht Teil der Erfindung, dass die Größe für das Display aus einem Puffer (Konfigurationspuffer) ausgelesen werden kann, bzw. in Pixel manuell eingegeben werden kann. Auch sind gemäß eines weiteren Beispiels, das kein Teil der Erfindung ist, andere Tasten für das Bestimmen des Rechtecks für die Größe des Displays denkbar.

Nun sollen noch die beiden Menü- / Software-Tasten zugeordnet werden (Fig. 3 und 4). Nach Bestätigung z.B. mit Taste "1" wird das Kalibrierungs-Menü verlassen (Fig. 5) und die ermittelten Einstellungen von der Anwendungs-Software für die MMI-Ansteuerung übernommen. Die so gesammelten Daten werden auf dem mobilen Telefon abgespeichert. Es ist denkbar, dass die so gesammelten Informationen auf der SIM-Karte oder in einem Flashbereich abgelegt werden, damit bei einem neuen Start der Anwendung diese zur Verfügung stehen.

## Patentansprüche

1. Verfahren zur Kalibrierung eines Mensch-Maschine-Interface einer JAVA-Anwendungssoftware für Mobiltelefone mit einer Zehnertastatur und einem Display, mit einer linken und rechten Softwaretaste und mit Cursortasten umfassend die folgenden Schritte:
- Programmstart der JAVA-Anwendungssoftware auf einem Mobiltelefon,
- Starten eines Kalibrierungsdialogs,
wobei zunächst ein Benutzer des Mobiltelefons in einem Bestätigungsdialog aufgefordert wird, eine gegebene Taste der Zehnertastatur zu betätigen, und Ermitteln des Tastaturcodes der betätigten Taste, damit die betätigte Taste als Bestätigungstaste zur Bestätigung von Eingaben definiert ist;
um dann den Benutzer zur interaktiven Festlegung des sichtbaren und später genutzten Displayausschnitts aufzufordern, und zwar über die Definition eines Rechtecks, welches auf dem Display in der linken oberen Ecke eingezeichnet ist, und in die rechte untere Ecke durch den Benutzer mit den Cursortasten auf maximale Displaygröße aufzuziehen ist, wobei der Benutzer dazu aufgefordert wird, diesen Displayausschnitt anschließend durch die Bestätigungstaste zu bestätigen;
- Auffordern des Benutzers zum Betätigen der linken und der rechten Softwaretaste, wobei wiederum deren Tastaturcodes ermittelt werden, und jeweils Auffordern des Benutzers diese durch die Bestätigungstaste zu bestätigen;
- Ausführen der JAVA-Anwendungssoftware unter Verwendung der eingegebenen Kalibrierungsinformationen.

2. Das Verfahren nach dem vorhergehenden Anspruch, wobei die Aufforderung zur interaktiven Festlegung des sichtbaren und später genutzten Displayausschnitts über die Definition des Rechtecks erfolgt, welches auf dem Display in der linken oberen Ecke eingezeichnet ist, und das mit den Cursortasten "nach unten" und "nach rechts" maximal bis zum rechten bzw. unteren Rand des Displays durch den Benutzer aufzuziehen ist.

3. Das Verfahren nach einem oder mehreren der vorhergehenden Ansprüche, wobei noch weitere Schritte zur Abfrage von weiteren Tasten umfassend "zurück", "clear", "fire" oder zur Abfrage der Cursortasten zusätzlich eingefügt sind.

4. Das Verfahren nach einem oder mehreren der vorhergehenden Ansprüche, wobei durch den Bestätigungsdialog eine relative Zuordnung der Zehnertastatur abgefragt wird, so dass, falls das Mobiltelefoneigene eigene Keycodes verwendet, eine Anpassung erfolgen kann.

5. Das Verfahren nach einem oder mehreren der vorhergehenden Ansprüche, wobei der Kalibrierungsdialog aus der Anwendungssoftware später auch erneut aufgerufen wird, falls der Benutzer die Darstellung auf dem Display ändern oder anpassen möchte.

6. Das Verfahren nach einem oder mehreren der vorhergehenden Ansprüche, wobei die Kalibrierungsinformationen dauerhaft in einem Speicherbereich des Mobiltelefons gespeichert werden.

7. Das Verfahren nach dem vorhergehenden Anspruch, wobei der Speicherbereich eines oder mehrere der folgenden Elemente ist: SIM-Karte, einsteckbarer nicht flüchtiger Interner Flash-Speicher, SD-Card.

8. Das Verfahren nach einem oder mehreren der vorhergehenden zwei Ansprüche, wobei die Anwendungssoftware die gespeicherten Kalibrierungsinformationen bei einem erneuten Starten lädt und somit nicht erneut kalibriert werden muss.

9. Datenträger mit einer Datenstruktur, die beim Laden in ein Mobiltelefon, das JAVA unterstützt, ein Verfahren auf dem Mobiltelefon nach einem oder mehreren der vorhergehenden Ansprüche implementiert.

10. Anwendungssoftware, die beim Laden in ein Mobiltelefon, das JAVA unterstützt, ein Verfahren auf dem Mobiltelefon nach einem oder mehreren der Ansprüche 1-8 implementiert.

## Claims

1. A method of calibrating a human-machine interface of a JAVA application software for mobile phones having a numeric 10Kex keypad and a display, having left and right software keys and having cursor keys, comprising the following steps:
- program start of the JAVA application software on a mobile phone;
- starting a calibration dialogue,
wherein first a user of the mobile phone is requested in a confirmation dialogue to press a given key of the numeric keypad, and determining the keypad code of the pressed key so that the pressed key is defined as a confirmation key for confirming entries;
to then prompt the user to interactively define the visible and later used display section by defining a rectangle, which is drawn on the display in the upper left corner, and which is drawn into the lower right corner by the user with the cursor keys to the maximum display size, the user being prompted to confirm this display section by pressing the confirm key;
- prompting the user to press the left and right software keys, again determining their keyboard codes, and prompting the user to confirm each by pressing the confirmation key;
- running the Java application software using the calibration information entered.

2. The method according to the previous claim, wherein the request for interactive definition of the visible and later used display section is made by defining the rectangle which is drawn on the display in the upper left corner and which is to be drawn by the user with the cursor keys "down" and "right" at most to the right or lower edge of the display.

3. The method according to one or more of the preceding claims, comprising further steps for querying further keys comprising "back", "clear", "fire" or for querying the cursor keys additionally inserted.

4. The method according to one or more of the previous claims, wherein the confirmation dialog asks for a relative assignment of the numeric keypad, so that if the mobile phone uses its own key codes, an adjustment can be made.

5. The method according to one or more of the previous requirements, wherein the calibration dialog from the application software is also called up again later if the user wants to change or adjust the display on the screen.

6. The method according to one or more of the preceding claims, wherein the calibration information is permanently stored in a memory area of the mobile phone.

7. The method according to the preceding claim, wherein the memory area is one or more of the following elements: SIM card, insertable non-volatile internal flash memory, SD card.

8. The method according to one or more of the previous two claims, wherein the application software loads the stored calibration information at restart and therefore does not need to be recalibrated.

9. A data carrier having a data structure which, when loaded into a mobile phone supporting JAVA, implements a method on the mobile phone according to one or more of the preceding claims.

10. Application software which, when loaded into a mobile phone supporting JAVA, implements a method on the mobile phone according to one or more of claims 1-8.

## Revendications

1. Un procédé pour l'étalonnage d'une interface homme-machine d'un logiciel d'application Java pour téléphones mobiles ayant un clavier numérique10Kex ainsi qu'un écran, ayant des touches logicielles gauche et droite et ayant des touches de curseur, comprenant les étapes consistant à :
- démarrer un programme d'une application JAVA sur un téléphone mobile;
- lancer une boîte de dialogue d'étalonnage,
dans laquelle l'utilisateur est d'abord invité dans la boîte de dialogue de confirmation à appuyer sur une touche déterminé du clavier numérique, et déterminer le code du clavier de la touche appuyée de telle façon que la touche appuyée est définie comme étant une touche de confirmation pour confirmer des saisies ;
inviter ensuite l'utilisateur à définir de manière interactive la section d'affichage visible utilisée ultérieurement en définissant un rectangle, qui est dessiné sur l'écran dans le coin gauche supérieur, et qui est dessiné dans le coin droit inférieur par l'utilisateur au moyen des touches de curseurs pour une taille d'écran maximale, l'utilisateur étant invité à confirmer cette section d'affichage en appuyant sur la clé de confirmation ;
- inviter l'utilisateur à presser les touches logicielles gauche et droite, déterminant à nouveau leurs codes de claviers, et invitant l'utilisateur à confirmer chacun par un appui sur la touche de confirmation ;
- exécuter le logiciel d'application Java en utilisant l'information d'étalonnage saisie.

2. Le procédé selon la revendication précédente, dans lequel la demande de définition interactive de la section d'affichage visible et utilisée ultérieurement a lieu via la définition d'un rectangle, qui est affichée sur l'affichage dans le coin supérieur gauche, et qui est dessiné par l'utilisateur au moyen des touches de curseur "bas" et "droit " jusqu'au bord droit ou inférieur de l'écran.

3. Le procédé selon une ou plusieurs des revendications précédentes, comprenant des étapes supplémentaires pour interroger des touches telles que "retour", "effacement", "feu" ou pour interroger des touches de curseur insérées de manière additionnelle.

4. Le procédé selon une ou plusieurs des revendications précédentes, dans lequel la boîte de dialogue de confirmation interroge également pour une affectation relative du clavier numérique, de sorte que si la plate-forme utilise ses propres codes de touche, un ajustement peut être effectué.

5. Le procédé selon une ou plusieurs des revendications précédentes, dans lequel la boîte de dialogue pour l'étalonnage à partir du logiciel d'application est rappelée ultérieurement à nouveau si l'utilisateur souhaite modifier ou régler l'affichage sur l'écran.

6. Le procédé selon une ou plusieurs des revendications précédentes, dans lequel l'information d'étalonnage est stockée en permanence dans une zone de mémoire du téléphone mobile.

7. Le procédé selon la revendication précédente, dans lequel la mémoire interne est un ou plusieurs des éléments suivants: carte SIM, mémoire flash interne non volatile enfichable, carte SD.

8. Le procédé selon une ou plusieurs des deux revendications précédentes, dans lequel le logiciel d'application charge les paramètres stockés lors du redémarrage et n'a donc pas besoin d'être à nouveau étalonné.

9. Un support de données avec une structure de données qui, lorsque chargé dans un téléphone mobile prenant en charge JAVA, implémente un procédé sur un terminal mobile selon une ou plusieurs des revendications précédentes.

10. Un logiciel applicatif qui, lorsque chargé dans un téléphone mobile prenant en charge Java, implémente un procédé sur le téléphone mobile selon une ou plusieurs des revendications 1-8.
